# FASCICULE DE BREVET EUROPEEN

(11) **EP 1 438 205 B1**
(45) Date de publication et mention de la délivrance du brevet: **16.03.2011**
(21) Numéro de dépôt: 02747534.2
(22) Date de dépôt: 13.06.2002
(51) Int. Cl.: B60H 1/00

(54) **INSTALLATION DE CHAUFFAGE ET/OU DE CLIMATISATION MUNIE DE VOLETS MOBILES POUR HABITACLE DE VEHICULE AUTOMOBILE, ET VEHICULE EQUIPE D'UNE TELLE INSTALLATION**
HEIZUNGS- UND/ODER KLIMAANLAGE MIT BEWEGLICHEN KLAPPEN FÜR DEN INNENRAUM EINES KRAFTFAHRZEUGES UND MIT SOLCH EINER ANLAGE AUSGERÜSTETES FAHRZEUG
HEATING AND/OR AIR-CONDITIONING UNIT WITH MOVING FLAPS FOR THE PASSENGER COMPARTMENT OF A MOTOR VEHICLE AND MOTOR VEHICLE WITH SAID UNIT

(30) Priorité: 18.06.2001 FR 0107941
(43) Date de publication de la demande: 21.07.2004
(73) Titulaire: Valeo Systèmes Thermiques, 78321 Le Mesnil Saint Denis (FR)
(72) Inventeur: BECK, Patrick, F-28210 Senantes (FR)
(74) Mandataire: Léveillé, Christophe
(86) Numéro de dépôt international: PCT/FR2002/002035
(87) Numéro de publication internationale: WO 2002/102614

(56) Documents cités:
- DE-A- 4 223 727
- DE-A- 4 302 504
- FR-A- 2 740 517
- FR-A- 2 752 775
- FR-A- 2 757 594

## Description

L'invention concerne une installation de chauffage et/ou de climatisation munie de volets mobiles pour habitacle de véhicule automobile, et un véhicule équipé d'une telle installation, voir FR 2757594.

Il est connu dans l'art antérieur d'équiper les véhicules automobiles d'une installation de chauffage et/ou de climatisation munie notamment d'un organe de propulsion d'air tel qu'un pulseur, d'un moyen de chauffage ou de refroidissement tel qu'un radiateur ou un condenseur, et de conduites d'aération équipées de moyens d'obturation et d'orientation de l'air expulsé, cet air pouvant être tout aussi bien chaud que froid.

Typiquement, ces installations comprennent au moins un volet articulé qui dirige l'air vers le haut de la planche de bord pour la fonction désembuage et un volet articulé qui dirige l'air vers le bas de l'habitacle, typiquement les pieds. Ces deux volets fonctionnent en collaboration de telle sorte qu'il est possible d'avoir de l'air uniquement en fonction désembuage, ou bien de l'air uniquement en fonction basse, ou bien encore de l'air réparti entre ces deux fonctions. Les deux volets sont en général liés entre eux de façon à pouvoir être déplacés conjointement pour passer d'une fonction à une autre.

Cette liaison est typiquement composée de bielles et de leviers ou bien d'engrenages/pignons ou encore de câbles reliés à un actionneur disposé sur la planche de bord et facilement accessible par l'occupant du véhicule. Il s'agit donc d'une liaison relativement complexe et coûteuse à mettre en oeuvre. Les débattements que peuvent atteindre les volets avec ce type de liaison sont de façon générale réduits, compte tenu notamment de la rigidité importante de la liaison et du nombre de pièces utilisées. Par ailleurs, le montage à l'intérieur de l'installation de chauffage et/ou de climatisation est souvent complexe eu égard au nombre de pièces requises et à leur cinématique.

Le but de l'invention est de résoudre les inconvénients évoqués ci-dessus.

Pour ce faire, l'invention propose que la liaison entre les deux volets soit simplifiée et rendue flexible pour définir un débattement optimisé.

Plus précisément, l'invention a pour objet une installation de chauffage et/ou de climatisation pour habitacle de véhicule automobile comprenant au moins une conduite renfermant deux volets articulés pour répartir l'air chaud et/ou froid en direction de zones définies dudit habitacle, les volets étant connectés l'un à l'autre pour pouvoir pivoter conjointement respectivement autour d'axes parallèles entre eux, dans laquelle les volets sont reliés en vis-à-vis par l'intermédiaire d'au moins une tige, la liaison entre chaque extrémité de la tige et chaque volet possédant au moins un degré de liberté en rotation selon un axe sensiblement parallèle à l'axe de rotation de l'un au moins des volets.

Selon un premier mode de réalisation, l'un au moins des volets présente, sur une surface, un logement surmoulé de forme au moins sensiblement hémisphérique adapté pour recevoir une protubérance au moins sensiblement hémisphérique dont est munie une extrémité de la tige de liaison pour former une liaison de type rotule.

Selon une variante de réalisation, l'un au moins des volets présente, sur une surface, une protubérance surmoulée en saillie de forme au moins hémisphérique adaptée pour coopérer avec un logement creux au moins hémisphérique dont est munie une extrémité de la tige de liaison pour former une liaison de type rotule.

Ces solutions permettent ainsi de réduire considérablement le nombre de pièces utilisées pour réaliser la cinématique des volets. Par ailleurs, lors du montage des volets dans l'installation de chauffage et/ou de climatisation, il est ainsi possible de lier préalablement les volets avec la tige, ce qui évite de perdre des pièces.

Selon un autre mode de réalisation, l'une au moins des extrémités de la tige de liaison présente une zone affaiblie mécaniquement, et le volet, ainsi que la zone affaiblie de la tige, sont recouverts par une protubérance surmoulée réalisée dans un matériau plus souple que celui du volet et de la tige.

Selon une variante de réalisation, la tige est formée d'une seule pièce avec l'un au moins des volets et présente, proche du volet, une zone affaiblie mécaniquement recouverte par une protubérance surmoulée réalisée dans un matériau plus souple que celui du volet et de la tige.

Afin de permettre un montage facile de la tige et de larges débattements des volets, il est prévu que le surmoulage de chaque logement/protubérance du volet ou de la tige soit réalisé(e) dans un matériau plastique élastomère. Cette solution permet également de compenser les jeux entre les volets.

Avantageusement, chaque logement/protubérance du volet est surmoulé(e) en même temps qu'une lèvre périphérique d'étanchéité dudit volet. Ceci permet de réaliser les fonctions de liaison et d'étanchéité lors d'une seule opération de moulage, réduisant ainsi les délais de fabrication de la pièce et de réaliser des économies de moule et de matière.

Afin de garantir une liaison de bonne qualité, stable, compacte et résistante, la tige de liaison est rectiligne et rigide.

Avantageusement, les volets sont parallèles entre eux et reliés par plusieurs tiges de liaison.

A titre d'exemple, le premier volet est un volet d'orientation de l'air en direction d'un pare-brise de véhicule et le second volet est un volet d'orientation de l'air en direction d'une partie basse de l'habitàcle, par exemple une zone d'occupation des jambes d'un passager.

L'invention a également pour objet un véhicule muni d'un habitacle équipé d'une installation de chauffage et/ou de climatisation telle que décrite précédemment.

D'autres caractéristiques, détails et avantages de l'invention ressortiront à la lecture de la description qui suit relative à d'exemples de réalisation non limitatifs, en référence aux dessins annexés qui représentent respectivement :
- la figure 1, une vue en coupe d'une partie d'une installation de chauffage et/ou de climatisation pour habitacle de véhicule automobile comprenant deux volets articulés connectés par une tige de liaison ;
- la figure 2, une vue de détail de la figure 1 représentant la liaison entre un volet et la tige ;
- la figure 3, une vue similaire à la figure 1 dans laquelle les volets occupent une autre position ;
- la figure 4, une variante de réalisation de la figure 2 ;
- la figure 5, une vue en coupe d'un volet munie d'un surmoulage et d'une tige de liaison ;
- la figure 6, une vue du dessus de la figure 5 ;
- la figure 7, une vue de côté de la figure 6 ;
- la figure 8, une vue en coupe d'une variante e réalisation de la figure 5 ;
- la figure 9, une vue en perspective d'un volet et d'une tige de liaison moulés d'une pièce ; et
- la figure 10, la tige et le volet de la figure 9 recouverts partiellement et localement par un surmoulage.

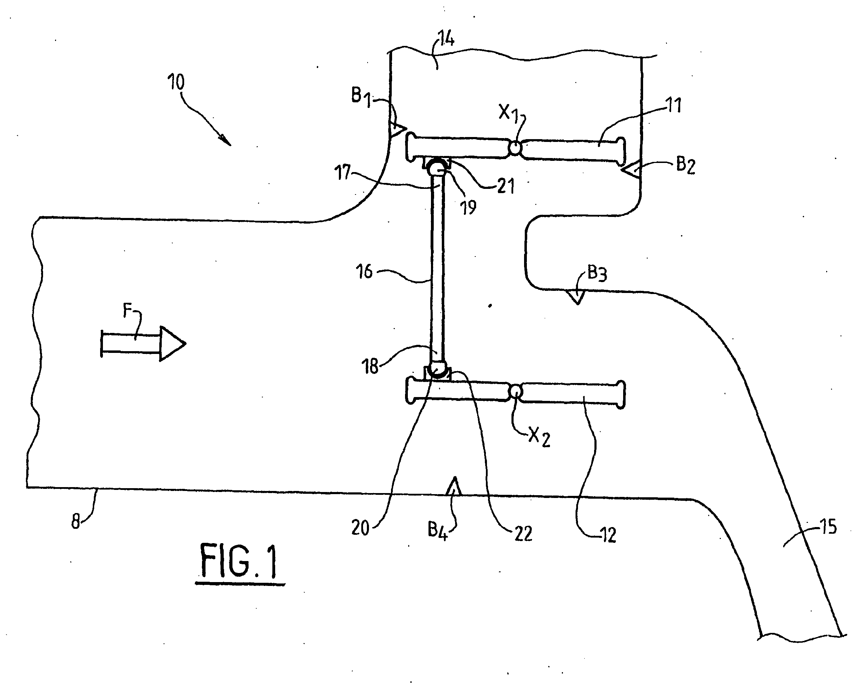

Une conduite d'aération 8 d'une installation 10 de chauffage et/ou de climatisation d'un habitacle de véhicule conforme à l'invention est schématisée sur la figure 1.

La conduite 8 renferme deux volets 11 et 12 articulés respectivement autours d'axes X1 et X2. Ces volets ont pour fonction d'orienter un flux d'air chaud ou froid F provenant d'un pulseur (non représenté) en direction d'une zone haute 14 de la conduite 8, par exemple pour la fonction désembuage d'un pare-brise de véhicule, et d'une zone basse 15 de la conduite, par exemple la zone où reposent les pieds des occupants placés à l'avant du véhicule.

Les volets 11 et 12 fonctionnent conjointement sous l'effet de l'actionnement d'un organe de manoeuvre (non représenté) tel qu'un bouton disposé sur la planche de bord du véhicule, c'est-à-dire qu'ils pivotent ensemble pour bloquer ou ouvrir le passage de l'air en direction des différentes zones précitées.

Pour cela, ils sont sensiblement parallèles entre eux et sont connectés l'un à l'autre par l'intermédiaire d'une tige rigide rectiligne 16 de liaison réalisée par exemple en matériau plastique ou en métal.

Cette tige de liaison 16 présente, respectivement à chacune de ses extrémités 17 et 18, des protubérances 19 et 20 ayant une surface de forme s'étendant sur au moins une demi-sphère, par exemple les deux tiers d'une sphère dans l'exemple représenté. Cette portion de sphère peut être usinée dans la masse, obtenue de moulage ou être constituée d'une pièce rapportée solidement fixée à l'extrémité de la tige 16. Elle peut être recouverte d'un matériau à faible coefficient de frottement tel que du Téflon (marque déposée)

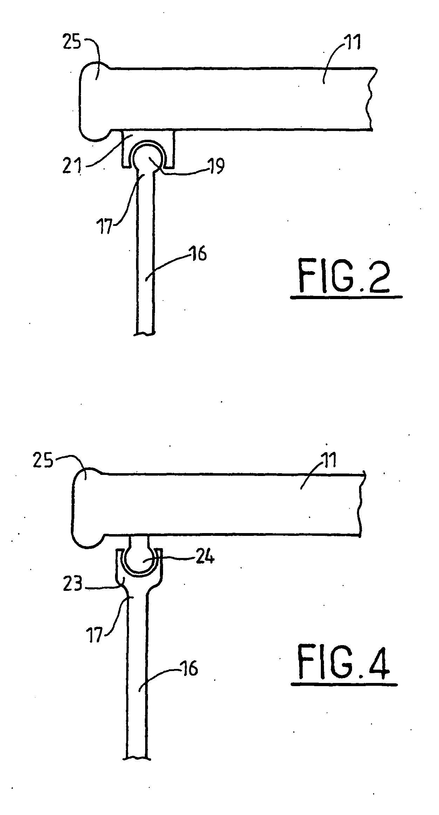

Comme cela est également représenté à une échelle agrandie sur la vue de détail de la figure 2, les protubérances 19 et 20 de la tige 16 coopèrent avec des logements 21 et 22 qui sont surmoulés en saille sur une surface de chacun des volets 11 et 12 de manière à former une liaison de type rotule, c'est-à-dire à trois degrés de liberté en rotation. A cet effet, les logements 21 et 22 présentent chacun une forme intérieure creuse de forme sensiblement supérieure à une demi-sphère ayant sensiblement le même diamètre que celui des portions de sphère des protubérances 19 et. 20 de la tige 16.

Chaque logement est surmoulé dans une matière plus souple que celle utilisée pour la tige et les volets, un matériau plastique élastomère dans l'exemple de réalisation. Pour réduire les opérations de fabrication et le nombre de moule, le logement est également surmoulé en même temps qu'une lèvre d'étanchéité 25 parcourant la périphérie du volet, comme cela est représenté en détail sur la figure 2.

Le montage des volets est très simple à réaliser. Chaque protubérance 19 ou 20 de la tige 16 est montée légèrement à force dans le logement respectif 21 ou 22 de chaque volet 11 et 12 de manière à former la liaison rotule précitée et un sous-ensemble unitaire.

Une fois ce sous-ensemble monté dans l'installation de chauffage et/ou de climatisation, les volets 11 et 12 sont disposés parallèlement entre eux et peuvent pivoter conjointement dans un sens ou dans l'autre grâce à la tige afin de diriger le flux d'air au bon endroit, comme cela est représenté en traits pointillés sur la figure 1. La liaison rotule permet aux volets d'avoir de bons débattements angulaires et le matériau utilisé pour les logements permet de rattraper le jeu pouvant exister entre ces volets.

Cette liaison rotule est ainsi à la fois rigide, dans le sens où les volets fonctionnent bien en harmonie en restant parallèles entre eux, et souple grâce à l'élastomère utilisé pour réaliser les logements.

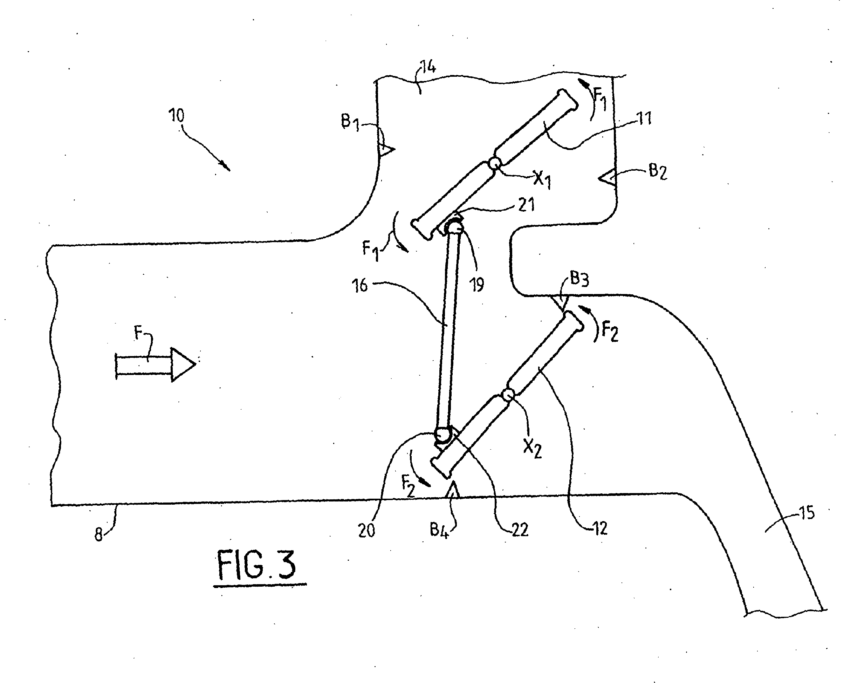

En fonctionnement, les volets 11 et 12 peuvent ainsi passer d'une première position extrême illustrée par la figure 1, dans laquelle l'air expulsé est exclusivement envoyé vers la zone basse 15 de la conduite 8, à une seconde position, la position extrême illustrée par la figure 3, dans laquelle l'air expulsé est exclusivement envoyé vers la zone haute 14 de la conduite 8, en passant par toutes les positions intermédiaires (flèches F1 et F2). Ces positions permettent, dans le cas présent, de dégivrer le pare-brise tout en réchauffant les jambes et les pieds des occupants de l'avant du véhicule. L'amplitude importante des débattements est matérialisée par la position des butées B1 à B4.

Comme cela est représenté sur la figure 4, il est également possible de munir au moins l'extrémité 17 de la tige 16 d'un logement 23 sensiblement hémisphérique coopérant avec une protubérance 24 sensiblement hémisphérique surmoulée sur le volet 12. Cette structure inversée permet d'obtenir de la même façon une liaison rotule qui possède les mêmes caractéristiques que celle illustrée par les figures précédentes. Bien entendu, la tige 16 peut être munie à ses deux extrémités 17 et 18 d'un logement 23 et les deux volets qu'elle relie sont alors chacun muni d'une protubérance 24 pour compléter la liaison rotule.

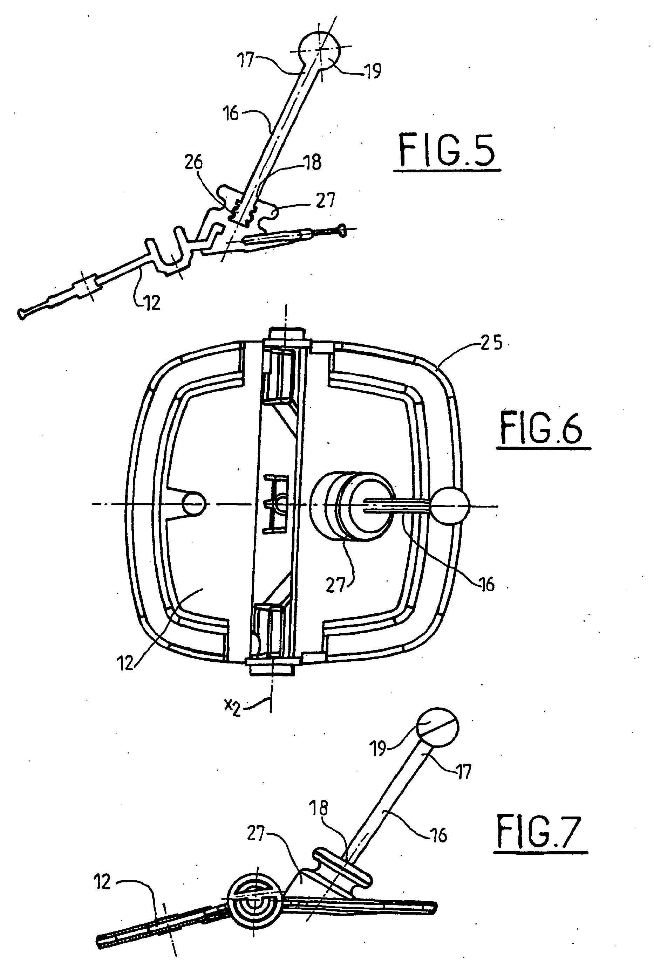

Sur les figures 5 à 7, un autre mode de réalisation de la liaison entre les deux volets 11 et 12 est représentée. Dans cette variante, l'une des extrémités 18 de la tige 16 présente, à la place d'une protubérance sphérique ou d'un logement à l'une de ses extrémités, une zone 26 affaiblie mécaniquement. Cette zone se présente, dans l'exemple de réalisation, sous la forme de stries ou de gorges périphériques réalisées sur une petite partie de sa longueur, typiquement de quelques millimètres à quelques centimètres.

Un surmoulage 27 en élastomère est réalisé sur le volet 12 et englobe une partie de la tige de liaison 6, autour de la zone affaiblie mécaniquement 26. De cette façon, la partie de la tige affaiblie mécaniquement collabore avec l'élastomère du surmoulage 27 pour former une liaison souple présentant un degré de liberté en rotation au moins selon un axe sensiblement parallèle à celui du volet pour accompagner le mouvement du volet en utilisation. L'élastomère engendre une faible force de rappel entre la tige et le volet, sans toutefois nuire aux mouvements des volets les uns par rapport aux autres. L'autre extrémité 17 de la tige de liaison 16 peut être réalisée de la même façon avec le surmoulage du second volet, ou bien présenter une liaison rotule, telle que par exemple la protubérance 19.

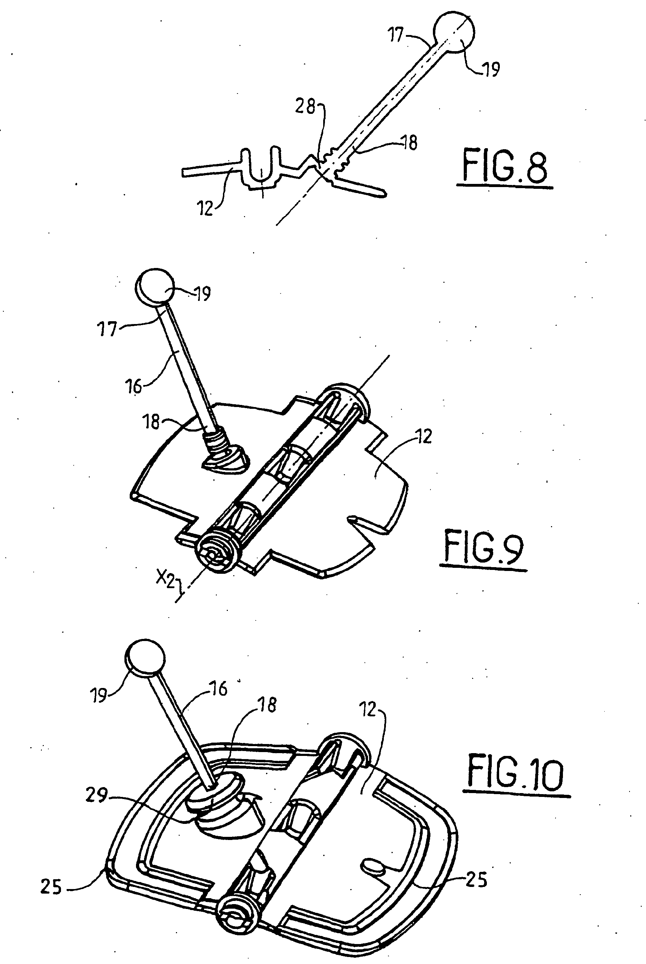

Les figures 8 à 10 illustrent une variante de réalisation des figures 5 à 7. Dans cette variante, la tige de liaison 16 est moulée d'une pièce avec l'un des volets 11 ou 12 et présente à une extrémité 18 un cordon de 28, liaison qui possède une faible résistance mécanique à la flexion. Pour cela, il est prévu un cordon 28 ayant des dimensions , -épaisseur, longueur- , permettant à la tige de liaison 16 de présenter une certaine fragilité et une souplesse à la flexion.

Ainsi, une fois un surmoulage 29 en élastomère disposé autour du cordon 28 et de l'extrémité 18 de la tige 16, une liaison avec au moins un degré de liberté en rotation selon un axe sensiblement parallèle à l'axe de rotation du volet est créée entre la tige 16 et le volet 12. En fonctionnement, la tige 16 peut piloter les deux volets 11 et 12 tout en ayant la possibilité d'accompagner ce mouvement en pivotant légèrement grâce à l'élasticité de l'élastomère du surmoulage et de la résistance réduite du cordon de liaison 28 entre la tige 16 et le volet 12. L'autre extrémité 17 de la tige de liaison peut présenter une liaison rotule 19 telle que celle illustrée sur les figures 1 à 4, ou bien une liaison identique à celle des figures 5 à 7.

Il doit être bien entendu toutefois que ces exemples sont donnés uniquement à titre d'illustration de l'objet de l'Invention dont ils ne constituent en aucune manière une limitation.

Ainsi, il est possible de monter en parallèle plus de deux volets, par exemple un volet supérieur pour la fonction désembuage, un volet médian pour l'aération de l'habitacle, et un volet inférieur pour les pieds des occupants.

Il est également possible de disposer deux, voire trois tiges entre deux volets de manière à rigidifier l'ensemble et garantir une articulation plus homogène avec une meilleure répartition des forces.

## Revendications

1. Installation (10) de chauffage et/ou de climatisation pour habitacle de véhicule automobile comprenant au moins une conduite (8) renfermant deux volets articulés (11,12) pour répartir l'air chaud et/ou froid en direction de zones définies dudit habitacle, les volets (11, 12) étant connectés l'un à l'autre pour pouvoir pivoter conjointement respectivement autour d'axes parallèles entre eux, les volets (11,12) étant reliés en vis-à-vis par l'intermédiaire d'au moins une tige de connexion (16), la liaison entre chaque extrémité (17, 18) de la tige de liaison (16) et chaque volet (11, 12) possédant au moins un degré de liberté en rotation selon un axe sensiblement parallèle à l'axe de rotation de l'un au moins des volets (11, 12), **caractérisé en ce que** l'un au moins des volets (11 ; 12) présente, sur une surface, un logement (21 ; 22) surmoulé de forme au moins sensiblement hémisphérique adapté pour recevoir une protubérance (19 ; 20) au moins sensiblement hémisphérique dont est munie une extrémité (17 ; 18) de la tige de liaison (16) pour former une liaison de type rotule.

2. Installation (10) de chauffage et/ou de climatisation pour habitacle de véhicule automobile comprenant au moins une conduite (8) renfermant deux volets articulés (11,12) pour répartir l'air chaud et/ou froid en direction de zones définies dudit habitacle, les volets (11, 12) étant connectés l'un à l'autre pour pouvoir pivoter conjointement respectivement autour d'axes parallèles entre eux, les volets (11,12) étant reliés en vis-à-vis par l'intermédiaire d'au moins une tige de connexion (16), la liaison entre chaque extrémité (17, 18) de la tige de liaison (16) et chaque volet (11, 12) possédant au moins un degré de liberté en rotation selon un axe sensiblement parallèle à l'axe de rotation de l'un au moins des volets (11, 12), **caractérisée en ce que** l'un au moins des volets (11 ; 12) présente, sur une surface, une protubérance (24) surmoulée en saillie de forme au moins hémisphérique adaptée pour coopérer avec un logement creux (23) au moins hémisphérique dont est munie une extrémité (17 ; 18) de la tige de liaison (16) pour former une liaison de type rotule.

3. Installation (10) de chauffage et/ou de climatisation pour habitacle de véhicule automobile comprenant au moins une conduite (8) renfermant deux volets articulés (11,12) pour répartir l'air chaud et/ou froid en direction de zones définies dudit habitacle, les volets (11, 12) étant connectés l'un à l'autre pour pouvoir pivoter conjointement respectivement autour d'axes parallèles entre eux, les volets (11,12) étant reliés en vis-à-vis par l'intermédiaire d'au moins une tige de connexion (16), la liaison entre chaque extrémité (17, 18) de la tige de liaison (16) et chaque volet (11, 12) possédant au moins un degré de liberté en rotation selon un axe sensiblement parallèle à l'axe de rotation de l'un au moins des volets (11, 12), **caractérisée en ce que** l'une au moins des extrémités (17 ; 18) de la tige (16) de liaison présente une zone (26) affaiblie mécaniquement, et le volet (11 ; 12) ainsi que la zone (26) affaiblie de la tige (16), sont recouverts par une protubérance surmoulée (27) réalisée dans un matériau plus souple que celui du volet (11 ; 12) et de la tige (16).

4. Installation (10) de chauffage et/ou de climatisation pour habitacle de véhicule automobile comprenant au moins une conduite (8) renfermant deux volets articulés (11,12) pour répartir l'air chaud et/ou froid en direction de zones définies dudit habitacle, les volets (11, 12) étant connectés l'un à l'autre pour pouvoir pivoter conjointement respectivement autour d'axes parallèles entre eux, les volets (11,12) étant reliés en vis-à-vis par l'intermédiaire d'au moins une tige de connexion (16), la liaison entre chaque extrémité (17, 18) de la tige de liaison (16) et chaque volet (11, 12) possédant au moins un degré de liberté en rotation selon un axe sensiblement parallèle à l'axe de rotation de l'un au moins des volets (11, 12), **caractérisée en ce que** la tige de liaison (16) est formée d'une seule pièce avec l'un au moins des volets (11 ; 12) et présente, proche du volet, une zone affaiblie mécaniquement (28) recouverte par une protubérance surmoulée (29) réalisée dans un matériau plus souple que celui du volet (11 ; 12) et de la tige (16).

5. Installation selon l'une des revendications 2 à 4, dans laquelle l'un au moins des volets (11 ; 12) présente, sur une surface, un logement (21 ; 22) surmoulé, de forme au moins sensiblement hémisphérique adapté pour recevoir une protubérance (19 ; 20) au moins sensiblement hémisphérique dont est munie une extrémité (17 ; 18) de la tige de liaison (16) pour former une liaison de type rotule.

6. Installation selon la revendication 1, 3 ou 4, dans laquelle l'un au moins des volets (11 ; 12) présente, sur une surface, une protubérance (24) surmoulée en saillie de forme au moins hémisphérique adaptée pour coopérer avec un logement creux (23) au moins hémisphérique dont est munie une extrémité (17 ; 18) de la tige de liaison (16) pour former une liaison de type rotule.

7. Installation selon l'une quelconque des revendications 1, 2 ou 4, dans laquelle l'une au moins des extrémités- (17 ; 18) de la tige (16) de liaison présente une zone (26) affaiblie mécaniquement, et le volet (11 ; 12) ainsi que la zone (26) affaiblie de la tige (16), sont recouverts par une protubérance surmoulée (27) réalisée dans un matériau plus souple que celui du volet (11 ; 12) et de la tige (16).

8. Installation selon l'une quelconque des revendications 1 à 3, dans laquelle la tige de liaison (16) est formée d'une seule pièce avec l'un au moins des volets (11 ; 12) et présente, proche du volet, une zone affaiblie mécaniquement (28) recouverte par une protubérance surmoulée (29) réalisée dans un matériau plus souple que celui du volet (11 ; 12) et de la tige (16).

9. Installation selon l'une quelconque des revendications 1 à 8, dans laquelle le surmoulage de chaque logement/protubérance (21 ; 22 : 24 ; 27 ; 28) du volet (11 ; 12) ou de la tige (16) est réalisé (e) dans un matériau plastique élastomère.

10. Installation selon l'une quelconque des revendications précédentes, dans laquelle chaque logement/protubérance (21 ; 22 ; 24 ; 27 ; 29) du volet (11 ; 12) est surmoulé (e) en mme temps qu'une lèvre périphérique d'étanchéité (25) dudit volet.

11. Installation selon l'une quelconque des revendications précédente, dans laquelle la tige de liaison (16) est rectiligne et rigide.

12. Installation selon l'une quelconque des revendications précédentes, dans laquelle les volets (11,12) sont reliés deux à deux par plusieurs tiges de liaison (16).

13. Installation selon l'une quelconque des revendications précédentes, **caractérisé en ce que** les volets (11,12) sont parallèles entre eux.

14. Installation selon l'une quelconque des revendications précédentes, dans laquelle le premier volet (11) est un volet d'orientation de l'air en direction d'un pare-brise de véhicule et le second volet (12) est un volet d'orientation de l'air en direction d'une partie basse de l'habitacle, par exemple une zone de placement des pieds d'un occupant du véhicule.

15. Véhicule muni d'un habitacle équipé d'une installation 14 de chauffage et/ou de climatisation selon l'une quelconque des revendications précédentes.

## Claims

1. Heating and/or air conditioning unit (10) for the passenger compartment of a motor vehicle comprising at least one duct (8) enclosing two articulated flaps (11, 12) in order to distribute hot air and/or cold air in the direction of defined zones of said passenger compartment, the flaps (11, 12) being connected to one another in order to be able to jointly pivot respectively around axes that are parallel together; the flaps (11, 12) being connected across from one another by the intermediary of at least one connecting rod (16), with the link between each end (17, 18) of the connecting rod (16) and each flap (11, 12) having at least one degree of freedom in rotation according to an axis substantially parallel to the axis of rotation of at least one of the flaps (11, 12), **characterised in that** at least one of the flaps (11, 12) has, on a surface, an overmoulded housing (21, 22) with an at least substantially hemispherical form adapted to receive an at least substantially hemispherical protuberance (19, 20) of which is provided with an end (17, 18) of the connecting rod (16) in order to form a link of the ball-joint type.

2. Heating and/or air conditioning unit for the passenger compartment of a motor vehicle comprising at least one duct (8) enclosing two articulated flaps (11, 12) in order to distribute the hot air and/or cold air in the direction of defined zones of said passenger compartment, the flaps (11, 12) being connected to one another in order to be able to jointly pivot respectively around axes that are parallel together; the flaps (11, 12) are connected across from one another by the intermediary of at least one connecting rod (16), with the link between each end (17, 18) of the connecting rod (16) and each flap (11, 12) having at least one degree of freedom in rotation according to an axis substantially parallel to the axis of rotation of at least one of the flaps (11, 12), **characterised in that** at least one of the flaps (11, 12) has, on a surface, a protruding overmoulded protuberance (24) of an at least hemispherical form adapted to cooperate with a hollow at least hemispheric housing (23) of which is provided with an end (17, 18) of the connecting rod (16) in order to form a link of the ball-joint type.

3. Heating and/or air conditioning unit for the passenger compartment of a motor vehicle comprising at least one duct (8) enclosing two articulated flaps (11,12) in order to distribute the hot air and/or cold air in the direction of defined zones of said passenger compartment, the flaps (11, 12) being connected to one another in order to be able to jointly pivot respectively around axes that are parallel together; the flaps (11, 12) being connected across from one another by the intermediary of at least one connecting rod (16), with the link between each end (17, 18) of the connecting rod (16) and each flap (11, 12) having at least one degree of freedom in rotation according to an axis substantially parallel to the axis of rotation of at least one of the flaps (11, 12) **characterised in that** at least one of the ends (17, 18) of the connecting rod (16) has a mechanically-weakened zone (26), and the flap (11, 12) as well as the weakened zone (26) of the rod (16), are covered by an overmoulded protuberance (27) made from a material that is more flexible than that of the flap (11, 12) and of the rod (16).

4. Heating and/or air conditioning unit for the passenger compartment of a motor vehicle comprising at least one duct (8) enclosing two articulated flaps (11, 12) in order to distribute the hot air and/or cold air in the direction of defined zones of said passenger compartment, the flaps (11, 12) being connected to one another in order to be able to jointly pivot respectively around axes that are parallel together; the flaps (11, 12) are connected across from one another by the intermediary of at least one connecting rod (16), with the link between each end (17, 18) of the connecting rod (16) and each flap (11, 12) having at least one degree of freedom in rotation according to an axis substantially parallel to the axis of rotation of at least one of the flaps (11, 12), **characterised in that** the connecting rod (16) is formed of a single part with at least one of the flaps (11, 12) and has, close to the flap, a mechanically-weakened zone (28) covered by an overmoulded protuberance (29) made from a material that is more flexible than that of the flap (11, 12) and of the rod (16).

5. Unit according to one of claims 2 to 4, wherein at least one of the flaps (11, 12) has, on a surface, an overmoulded housing (21, 22) with an at least substantially hemispherical form adapted to receive an at least substantially hemispherical protuberance (19, 20) of which is provided with an end (17, 18) of the connecting rod (16) in order to form a link of the ball-joint type.

6. Unit according to claim 1, 3 or 4, wherein at least one of the flaps (11, 12) has, on a surface, a protruding overmoulded protuberance (24) of an at least hemispherical form adapted to cooperate with a hollow at least hemispheric housing (23) of which is provided with an end (17, 18) of the connecting rod (16) in order to form a link of the ball-joint type.

7. Unit according to any of claims 1, 2 or 4, wherein at least one of the ends (17, 18) of the connecting rod (16) has a mechanically-weakened zone (26), and the flap (11, 12) as well as the weakened zone (26) of the rod (16), are covered by an overmoulded protuberance (27) made from a material that is more flexible than that of the flap (11, 12) and of the rod (16).

8. Unit according to any of claims 1 to 3, wherein the connecting rod (16) is formed of a single part with at least one of the flaps (11, 12) and has, close to the flap, a mechanically-weakened zone (28) covered by an overmoulded protuberance (29) made from a material that is more flexible than that of the flap (11, 12) and of the rod (16).

9. Unit according to any of claims 1 to 8, wherein the overmoulding of each housing/protuberance (21, 22, 24, 27, 28) of the flap (11, 12) or of the rod (16) is made from an elastomeric plastic material.

10. Unit according to any of the preceding claims, wherein each housing/protuberance (21, 22, 24, 27, 29) of the flap (11, 12) is overmoulded at the same time as a peripheral sealing lip (25) of said flap.

11. Unit according to any of the preceding claims, wherein the connecting rod (16) is straight and rigid.

12. Unit according to any of the preceding claims, wherein the flaps (11, 12) are connected two-by-two by several connecting rods (16).

13. Unit according to any of the preceding claims, **characterised in that** the flaps (11, 12) are parallel to each other.

14. Unit according to any of the preceding claims, wherein the first flap (11) is a flap for directing the air in the direction of a motor vehicle and the second flap (12) is a flap for directing the air in the direction of a lower portion of the passenger compartment, for example a zone for the positioning of the feet of an occupant of the motor vehicle.

15. Motor vehicle provided with a passenger compartment provided with a heating and/or air conditioning unit 14 according to any of the preceding claims.

## Patentansprüche

1. Heiz- und / oder Klimaanlage (10) für den Fahrgastraum eines Kraftfahrzeugs, umfassend mindestens einen Schacht (8), der zwei gelenkige Klappen (11, 12) umfasst, um die warme und / oder kalte Luft in Richtung von definierten Bereichen des Fahrgastraums zu verteilen, wobei die Klappen (11, 12) miteinander verbunden sind, um sich gemeinsam jeweils um untereinander parallele Achsen drehen zu können; wobei die Klappen (11, 12) einander gegenüberliegend mit Hilfe mindestens eines Verbindungsstifts (16) verbunden sind, wobei die Verbindung zwischen jedem Ende (17, 18) des Verbindungsstifts (16) und jeder Klappe (11, 12) mindestens einen Grad der Drehfreiheit um eine Achse besitzt, die im Wesentlichen parallel zur Drehachse mindestens einer der Klappen (11, 12) ist, **dadurch gekennzeichnet, dass** mindestens eine der Klappen (11; 12) auf einer Oberfläche ein Lager (21, 22) aufweist, abgeformt mindestens im Wesentlichen in Form einer Halbkugel, angepasst, um einen mindestens im Wesentlichen halbkugelförmigen Vorsprung (19; 20) aufzunehmen, mit dem ein Ende (17; 18) des Verbindungsstifts (16) ausgestattet ist, um eine Verbindung des Typs Kugelkopf zu bilden.

2. Heiz- und / oder Klimaanlage (10) für den Fahrgastraum eines Kraftfahrzeugs, umfassend mindestens einen Schacht (8), der zwei gelenkige Klappen (11, 12) umfasst, um die warme und / oder kalte Luft in Richtung von definierten Bereichen des Fahrgastraums zu verteilen, wobei die Klappen (11, 12) miteinander verbunden sind, um sich gemeinsam jeweils um untereinander parallele Achsen drehen zu können; wobei die Klappen (11, 12) einander gegenüberliegend mit Hilfe mindestens eines Verbindungsstifts (16) verbunden sind, wobei die Verbindung zwischen jedem Ende (17, 18) des Verbindungsstifts (16) und jeder Klappe (11, 12) mindestens einen Grad der Drehfreiheit um eine Achse besitzt, die im Wesentlichen parallel zur Drehachse mindestens einer der Klappen (11, 12) ist, **dadurch gekennzeichnet, dass** mindestens eine der Klappen (11; 12) auf einer Oberfläche einen Vorsprung (24) aufweist der hervorspringend in Form mindestens einer Halbkugel abgeformt ist, angepasst, um mit einem hohlen, mindestens halbkugelförmigen Lager (23) zusammenzuarbeiten, mit dem ein Ende (17; 18) des Verbindungsstifts (16) ausgestattet ist, um eine Verbindung des Typs Kugelkopf zu bilden.

3. Heiz- und / oder Klimaanlage (10) für den Fahrgastraum eines Kraftfahrzeugs, umfassend mindestens einen Schacht (8), der zwei gelenkige Klappen (11,12) umfasst, um die warme und / oder kalte Luft in Richtung von definierten Bereichen des Fahrgastraums zu verteilen, wobei die Klappen (11, 12) miteinander verbunden sind, um sich gemeinsam jeweils um untereinander parallele Achsen drehen zu können; wobei die Klappen (11, 12) einander gegenüberliegend mit Hilfe mindestens eines Verbindungsstifts (16) verbunden sind, wobei die Verbindung zwischen jedem Ende (17, 18) des Verbindungsstifts (16) und jeder Klappe (11, 12) mindestens einen Grad der Drehfreiheit um eine Achse besitzt, die im Wesentlichen parallel zur Drehachse mindestens einer der Klappen (11, 12) ist, **dadurch gekennzeichnet, dass** mindestens eines der Enden (17; 18) des Verbindungsstifts (16) einen Bereich (26) aufweist, der mechanisch geschwächt ist, und die Klappe (11; 12) sowie der geschwächte Bereich (26) des Stifts (16) von einem abgeformten Vorsprung (27) bedeckt sind, der aus einem weicheren Material als demjenigen der Klappe (11; 12) und des Stifts (16) besteht.

4. Heiz- und / oder Klimaanlage (10) für den Fahrgastraum eines Kraftfahrzeugs, umfassend mindestens einen Schacht (8), der zwei gelenkige Klappen (11, 12) umfasst, um die warme und / oder kalte Luft in Richtung von definierten Bereichen des Fahrgastraums zu verteilen, wobei die Klappen (11, 12) miteinander verbunden sind, um sich gemeinsam jeweils um untereinander parallele Achsen drehen zu können; wobei die Klappen (11, 12) einander gegenüberliegend mit Hilfe mindestens eines Verbindungsstifts (16) verbunden sind, wobei die Verbindung zwischen jedem Ende (17, 18) des Verbindungsstifts (16) und jeder Klappe (11, 12) mindestens einen Grad der Drehfreiheit um eine Achse besitzt, die im Wesentlichen parallel zur Drehachse mindestens einer der Klappen (11, 12) ist, **dadurch gekennzeichnet, dass** der Verbindungsstift (16) aus einem einzigen Stück mit mindestens einer der Klappen (11; 12) geformt ist und nahe an der Klappe einen Bereich (28) aufweist, der mechanisch geschwächt ist und von einem abgeformten Vorsprung (29) bedeckt ist, der aus einem weicheren Material als demjenigen der Klappe (11; 12) und des Stifts (16) besteht.

5. Anlage nach einem der Ansprüche 2 bis 4, wobei mindestens eine der Klappen (11; 12) auf einer Oberfläche ein Lager (21; 22) aufweist, abgeformt mindestens im Wesentlichen in Form einer Halbkugel, angepasst, um einen mindestens im Wesentlichen halbkugelförmigen Vorsprung (19; 20) aufzunehmen, mit dem ein Ende (17; 18) des Verbindungsstifts (16) ausgestattet ist, um eine Verbindung des Typs Kugelkopf zu bilden.

6. Anlage nach Anspruch 1, 3 oder 4, wobei mindestens eine der Klappen (11; 12) auf einer Oberfläche einen Vorsprung (24) aufweist, der hervorspringend mindestens in Form einer Halbkugel abgeformt ist, angepasst, um mit einem hohlen, mindestens halbkugelförmigen Lager (23) zusammenzuarbeiten, mit dem ein Ende (17; 18) des Verbindungsstifts (16) ausgestattet ist, um eine Verbindung des Typs Kugelkopf zu bilden.

7. Anlage nach einem der Ansprüche 1, 2 oder 4, wobei mindestens eines der Enden (17; 18) des Verbindungsstifts (16) einen Bereich (26) aufweist, der mechanisch geschwächt ist, und die Klappe (11; 12) sowie der geschwächte Bereich (26) des Stifts (16) mit einem abgeformten Vorsprung (27) bedeckt sind, der aus einem weicheren Material als demjenigen der Klappe (11; 12) und des Stifts (16) besteht;

8. Anlage nach einem der Ansprüche 1 bis 3, wobei der Verbindungsstift (16) aus einem einzigen Stück mit mindestens einer der Klappen (11; 12) gebildet ist und nahe an der Klappe einen mechanisch geschwächten Bereich (28) aufweist, der mit einem abgeformten Vorsprung (29) bedeckt ist, der aus einem weicheren Material als demjenigen der Klappe (11; 12) und des Stifts (16) besteht.

9. Anlage nach einem der Ansprüche 1 bis 8, wobei die Abformung jedes Lagers / Vorsprungs (21; 22; 24; 27; 28) der Klappe (91; 12) oder des Stifts (16) aus einem elastomeren Plastikmaterial besteht.

10. Anlage nach einem der vorhergehenden Ansprüche, wobei jedes Lager / jeder Vorsprung (21; 22; 24; 27; 29) der Klappe (11; 12) zur glichen Zeit wie eine periphere Dichtungslippe (25) der Klappe abgeformt wird.

11. Anlage nach einem der vorhergehenden Ansprüche, wobei der Verbindungsstift (16) geradlinig und starr ist.

12. Anlage nach einem der vorhergehenden Ansprüche, wobei die Klappen (11, 12) jeweils zu zweit von mehreren Verbindungsstiften (16) verbunden sind.

13. Anlage nach einem der vorhergehenden Ansprüche, **dadurch gekennzeichnet, dass** die Klappen (11, 12) untereinander parallel sind.

14. Anlage nach einem der vorhergehenden Ansprüche, wobei die erste Klappe (11) eine Klappe zur Ausrichtung der Luft in Richtung einer Windschutzscheibe des Fahrzeugs ist und die zweite Klappe (12) eine Klappe zur Ausrichtung der Luft in Richtung eines unteren Teils des Fahrgastraums ist, z.B. eines Bereichs zur Anordnung der Fuße eines Fahrgasts des Fahrzeugs.

15. Fahrzeug mit einem Fahrgastraum, ausgestattet mit einer Heiz-und / oder Klimaanlage (14) nach einem der vorhergehenden Ansprüche.
